# FASCICULE DE BREVET EUROPEEN

(11) **EP 3 625 441 B1**
(45) Date de publication et mention de la délivrance du brevet: **21.04.2021**
(21) Numéro de dépôt: 18729731.2
(22) Date de dépôt: 15.05.2018
(51) Int. Cl.: F23R 7/00

(54) **SYSTÈME DE COMBUSTION À VOLUME CONSTANT**
KONSTANTES VOLUMENVERBRENNUNGSSYSTEM
COMBUSTION SYSTEM WITH A CONSTANT VOLUME

(30) Priorité: 16.05.2017 FR 1754286
(43) Date de publication de la demande: 25.03.2020
(73) Titulaire: Safran, 75015 Paris (FR)
(72) Inventeur: METGE, Pierre Jean-Baptiste, 77550 Moissy-Cramayel (FR); CONETE, Eric, 77550 Moissy-Cramayel (FR); MECUSON, Gautier, 77550 Moissy-Cramayel (FR); LEYKO, Matthieu, 77550 Moissy-Cramayel (FR)
(74) Mandataire: Cabinet Beau de Loménie
(86) Numéro de dépôt international: PCT/FR2018/051169
(87) Numéro de publication internationale: WO 2018/211209

(56) Documents cités:
- EP-A1- 0 595 384
- JP-A- H03 227 207
- US-A- 3 177 663
- US-A- 5 090 891
- Bruce Simpson: "The Argus V1 Pulsejet", , 11 janvier 2003 (2003-01-11), XP002777721, Extrait de l'Internet: URL:https://aardvark.co.nz/pjet/argusv1.sh tml [extrait le 2017-12-20]
- David Darling: "V-1", , 18 juillet 2012 (2012-07-18), XP002777722, Extrait de l'Internet: URL:http://www.daviddarling.info/encyclope dia/V/V-1.html [extrait le 2017-12-20]

## Description

L'invention concerne un système de combustion à volume constant comprenant une ou plusieurs chambres de combustion, chacune étant munies d'au moins une languette élastiquement déformable formant clapet d'admission d'air.

### Arrière-plan de l'invention

Une chambre de combustion est alimentée en air sous pression et comporte un injecteur de carburant qui est apte à injecter du carburant dans le flux d'air admis pour réaliser une combustion et provoquer ainsi l'émission de gaz chauds. Ces gaz chauds peuvent ensuite être utilisés pour entraîner une turbine. La chambre de combustion comprend au moins un port d'admission au travers duquel l'air est introduit à l'intérieur de la chambre, et un port d'échappement au travers duquel les gaz chauds sont évacués à l'extérieur de la chambre. Des chambres de combustion sont en particulier décrites dans le document US 5 090 891.

La chambre de combustion peut fonctionner selon un cycle de Humphrey, c'est-à-dire selon un cycle de combustion à volume constant ou « CVC ». Le cycle de combustion à volume constant comprend un temps de combustion (désigné par l'expression « phase de combustion »), un temps d'échappement (désigné par l'expression « phase d'échappement »), et un temps d'admission d'air frais et de balayage des gaz brûlés (désigné par l'expression « phase de balayage »). Durant la phase de combustion, les ports d'admission et d'échappement sont tous les deux fermés. Durant la phase d'échappement, le port d'admission est fermé et le port d'échappement ouvert. Lors de la phase de balayage, les ports d'admission et d'échappement sont tous les deux ouverts.

La chambre de combustion est ainsi communément munie d'un mécanisme d'admission et d'échappement permettant de contrôler l'ouverture et la fermeture des ports d'admission et d'échappement afin d'assurer la réalisation des trois phases du cycle précitées.

Il existe toutefois un besoin pour simplifier les mécanismes existants d'admission de l'air dans les chambres de combustion fonctionnant selon un cycle de combustion à volume constant.

### Objet et résumé de l'invention

A cet effet, l'invention propose, selon un premier aspect, un système de combustion à volume constant comprenant au moins une chambre de combustion qui comporte au moins un port d'admission et un port d'échappement,
le système étant caractérisé en ce qu'il comprend au moins une languette élastiquement déformable en matériau composite à matrice céramique formant clapet d'admission d'air, la languette étant présente à l'intérieur de la chambre et étant positionnée en regard du port d'admission, la languette comprenant une première extrémité fixe relativement à une paroi interne de la chambre et une deuxième extrémité libre opposée à la première extrémité, la deuxième extrémité étant mobile relativement à la paroi interne.

L'invention propose une solution simple pour gérer l'admission de l'air dans la chambre de combustion grâce à l'emploi de la languette élastiquement déformable dont une extrémité est fixe et l'autre extrémité est libre. Durant la phase de combustion, il y a augmentation de la pression dans le volume intérieur, ce qui conduit à l'application d'une force suffisante sur la languette pour la plaquer contre le port d'admission afin de l'obturer. Une fois la phase de combustion achevée, le port d'échappement est ouvert, ce qui contribue à faire diminuer la pression à l'intérieur de la chambre. La force s'appliquant sur la languette est ainsi réduite, et la languette s'écarte alors du port d'admission. Ce dégagement de la languette permet d'admettre de l'air frais provenant du milieu extérieur et de réaliser la phase de balayage.

La languette élastiquement déformable permet ainsi de gérer de manière passive l'admission de l'air durant les trois phases du cycle de combustion à volume constant. Cette languette constitue un mécanisme de contrôle de l'admission de l'air qui est simple, léger et peu encombrant. Le fait que la languette soit en matériau composite à matrice céramique (matériau CMC) lui permet d'assurer sa fonction malgré les hautes températures et pressions rencontrées en fonctionnement dans la chambre de combustion.

Dans un exemple de réalisation, la première extrémité de la languette est fixée à la paroi interne de la chambre.

Dans un exemple de réalisation, la languette est définie par au moins une fente ménagée dans une chemise d'admission d'air positionnée à l'intérieur de la chambre.

Dans un exemple de réalisation, la chambre comprend une pluralité de ports d'admission, chacun des ports d'admission étant en regard d'une languette élastiquement déformable.

Dans un exemple de réalisation, la chambre est délimitée par une paroi circonférentielle et les ports d'admission sont ménagés au travers de cette paroi circonférentielle.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 illustre, de manière schématique et partielle, une chambre de combustion utilisable dans le cadre de l'invention,
- les figures 2 à 5 sont des vues en coupe, schématiques et partielles, de la chambre de combustion de la figure 1 durant les différentes phases du cycle de combustion à volume constant,
- la figure 6 illustre un premier exemple de chemise d'admission d'air et une enceinte de chambre de combustion associée utilisables dans le cadre de l'invention, et
- la figure 7 illustre un deuxième exemple de chemise d'admission d'air et une enceinte de chambre de combustion associée utilisables dans le cadre de l'invention.

### Description détaillée de modes de réalisation

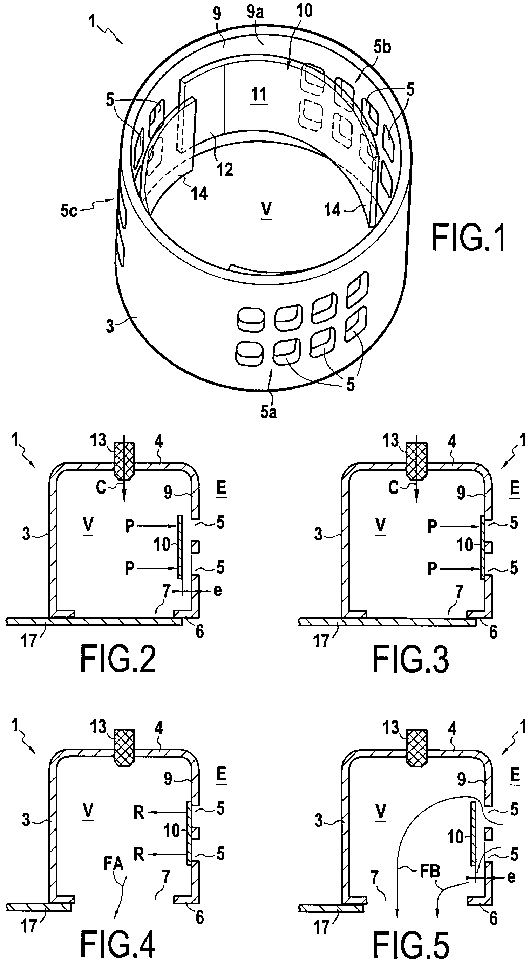

L'exemple illustré aux figures 1 à 5 concerne une chambre de combustion dans laquelle le clapet d'admission d'air est sous la forme d'une languette 10 fixée, à une de ses extrémités, à la paroi interne 9a de la chambre de combustion.

La chambre de combustion 1 comprend une enceinte 3 qui délimite un volume intérieur V. Le volume intérieur V est délimité et entouré par l'enceinte 3. L'enceinte 3 a ici une forme sensiblement cylindrique. L'enceinte 3 peut, plus généralement, avoir une forme symétrique de révolution. D'autres formes sont toutefois envisageables pour l'enceinte 3 comme une forme parallélépipédique, par exemple.

L'enceinte 3 comprend une paroi circonférentielle 9 qui est située autour du volume intérieur V de la chambre 1. L'enceinte 3 comprend en outre un premier fond 4 et un deuxième fond 6, représentés aux figures 2 à 5. Le premier fond 4 et le deuxième fond 6 délimitent chacun le volume intérieur V. Le premier fond 4 et le deuxième fond 6 sont situés de part et d'autre de la paroi circonférentielle 9.

La chambre de combustion 1 est munie d'un injecteur 13 de carburant placé ici sur le premier fond 4. La combustion peut être initiée de façon connue soit par un allumeur à étincelle (bougie), soit par un allumeur thermique à gaz (non représentés).

Dans l'exemple illustré, l'enceinte 3 définit une pluralité de ports d'admission 5. On ne sortirait toutefois pas du cadre de l'invention si la chambre comprenait un unique port d'admission. Les ports d'admission 5 sont ici ménagés au travers de la paroi circonférentielle 9. En positionnant ainsi les ports d'admission 5 autour du volume intérieur V, l'admission de l'air frais s'effectue à différentes positions de la circonférence de la chambre. Cette configuration améliore le renouvellement d'air frais, augmente les turbulences et donc l'efficacité de combustion. Une telle configuration permet en outre de refroidir efficacement la paroi de la chambre par l'air frais admis. On ne sort toutefois pas du cadre de l'invention si le ou les ports d'admission 5 sont positionnés ailleurs que sur la paroi circonférentielle 9.

Les ports d'admission 5 peuvent, comme illustré, être répartis en plusieurs groupes 5a, 5b et 5c de ports 5 d'admission. Chaque groupe 5a, 5b et 5c peut comporter une pluralité de ports d'admission 5. Dans l'exemple illustré, chaque groupe 5a, 5b et 5c comporte huit ports d'admission 5 et la paroi 5 présente trois groupes 5a, 5b et 5c. Les groupes 5a, 5b et 5c peuvent ou non être régulièrement répartis sur la paroi circonférentielle 5.

Dans cet exemple, chaque languette 10 est positionnée en regard de plusieurs ports d'admission 5. Plus précisément, chaque groupe 5a, 5b et 5c de ports 5 est en regard d'une languette 10 distincte.

La languette 10 est en matériau CMC, c'est-à-dire en un matériau comprenant un renfort fibreux densifié par une matrice au moins partiellement en céramique. L'enceinte 3 peut elle aussi être en matériau CMC ou, en variante, être en matériau métallique.

Dans un matériau CMC, le renfort fibreux peut être en fibres de carbone (C) ou en fibres de céramique, par exemple en fibres de carbure de silicium (SiC). Des fibres utilisables pour constituer ce renfort fibreux sont produites par la société japonaise Nippon Carbon sous la référence « Nicalon » ou « Hi-Nicalon » ou « Hi-Nicalon Type-S », ou par la société japonaise Ube Industries sous la référence « Tyranno-ZMI ». Les fibres de carbone utilisables sont, par exemple, fournies sous la dénomination Torayca T300 3K par la société Toray. Les fibres peuvent être revêtues d'une mince couche d'interphase en carbone pyrolytique (PyC), en nitrure de bore (BN) ou en carbone dopé au bore (BC, avec 5% at. à 20% at. de B, le complément étant C). Dans un matériau CMC, la matrice au moins partiellement en céramique. La matrice peut être composée à plus de 50% en masse par un matériau céramique. La matrice peut être constituée d'un matériau céramique. La matrice peut comporter au moins une phase de carbure de silicium, par exemple. La matrice peut être formée de manière connue en soi par infiltration chimique en phase gazeuse, ou CVI ("Chemical Vapor Infiltration"). La matrice peut aussi être au moins en partie formée par introduction de poudres, notamment poudres de carbone et éventuellement de céramique et infiltration par une composition métallique à base de silicium à l'état fondu, pour former une matrice de type SiC-Si. Un tel processus est bien connu et désigné couramment processus MI ("Melt Infiltration").

La languette 10 est élastiquement déformable afin de réaliser l'obturation et la ré-ouverture des ports d'admission 5 sous l'effet des variations de pression rencontrées en fonctionnement dans la chambre 1 comme il sera décrit plus bas. La forme mince et élancée de la languette 10 peut lui conférer son caractère élastiquement déformable. La languette 10 peut ainsi présenter une longueur qui est au moins égale à trois fois son épaisseur. Cette longueur peut être au moins égale à cinq fois l'épaisseur, voire au moins égale à dix fois l'épaisseur. La languette 10 présente une première extrémité 12 qui est fixée à une paroi interne 9a de l'enceinte 3. La première extrémité 12 peut par exemple être fixée par brasage à la paroi interne 9a. La première extrémité 12 est ici fixée sur la paroi circonférentielle 9. La première extrémité 12 est fixe relativement à la paroi interne 9a. La première extrémité 12 est fixée dans une zone de la paroi interne 9a qui est dépourvue de port d'admission 5. La languette 10 comprend en outre une deuxième extrémité 14 libre, distincte de la première extrémité 12, qui est mobile relativement à la paroi interne 9a. La languette 10 comprend une partie médiane 11, située entre les première 12 et deuxième 14 extrémités, qui est positionnée en regard des ports d'admission 5. La languette 10 peut s'étendre de manière circonférentielle autour du volume intérieur V.

La gestion de l'admission de l'air par la languette 10 va, à présent, être décrite en lien avec les figures 2 à 5.

La figure 2 illustre la chambre 1 au début de la combustion. Avant le début de la combustion, la languette 10 est en position d'équilibre et est espacée des ports d'admission 5 d'un espacement e non nul. Ainsi, le volume intérieur V est en communication avec l'extérieur E de la chambre 1 avant initiation de la combustion. Cette communication est assurée par les ports d'admission 5. Le port d'échappement 7 est, quant à lui, obturé par un obturateur 17 avant le début de la combustion. Le port d'échappement 7 est ici positionné au niveau du deuxième fond 6. On pourrait positionner différemment le port d'échappement. On a illustré un exemple où il y a un unique port d'échappement 7. On ne sort toutefois pas du cadre de l'invention lorsque la chambre 1 est munie de plusieurs ports d'échappement 7.

La combustion est initiée par injection de carburant (flèche C) et allumage. L'initiation de la combustion conduit à faire augmenter la pression dans le volume intérieur V. De la sorte, une pression est appliquée sur la languette 10 (flèches P). Lorsqu'un seuil de pression à l'intérieur du volume intérieur V est atteint, une force suffisante est appliquée sur la languette 10 pour la plaquer contre les ports d'admission 5 afin de les obturer. Cette configuration est illustrée à la figure 3 laquelle schématise la chambre durant la suite de la combustion. Dans ce cas, la partie médiane 11 de la languette 10, et éventuellement la deuxième extrémité 14, obturent les ports d'admission 5. Dans cette configuration, le volume intérieur V n'est pas en communication avec l'extérieur E.

Lorsque la combustion est terminée, le port d'échappement 7 est ouvert afin d'évacuer les gaz brûlés à l'extérieur de la chambre 1. Cette phase correspond à la phase d'échappement illustrée à la figure 4 où le flux des gaz brûlés sortant de la chambre est matérialisé par la flèche FA. Durant la phase d'échappement, la pression dans le volume intérieur V diminue, diminuant ainsi la force appliquée sur la languette 10. La languette 10 revient dans sa position d'équilibre dans laquelle elle est espacée des ports d'admission (flèches R).

On obtient alors la configuration illustrée à la figure 5 où les ports d'admission 5 et le port d'échappement 7 sont ouverts. Cette configuration permet la réalisation de la phase de balayage où il y a admission d'air frais et balayage des gaz brûlés (flèches FB). Après réalisation de cette étape de balayage, le port d'échappement 7 peut à nouveau être fermé puis une nouvelle étape de combustion peut être initiée comme décrit plus haut.

On notera donc que, grâce à la languette élastiquement déformable, l'invention permet de réaliser, de manière passive, l'obturation et la ré-ouverture du ou des ports d'admission 5. L'emploi de cette languette constitue un système léger avec contact souple qui présente une bonne réactivité d'ouverture et de fermeture des ports d'admission.

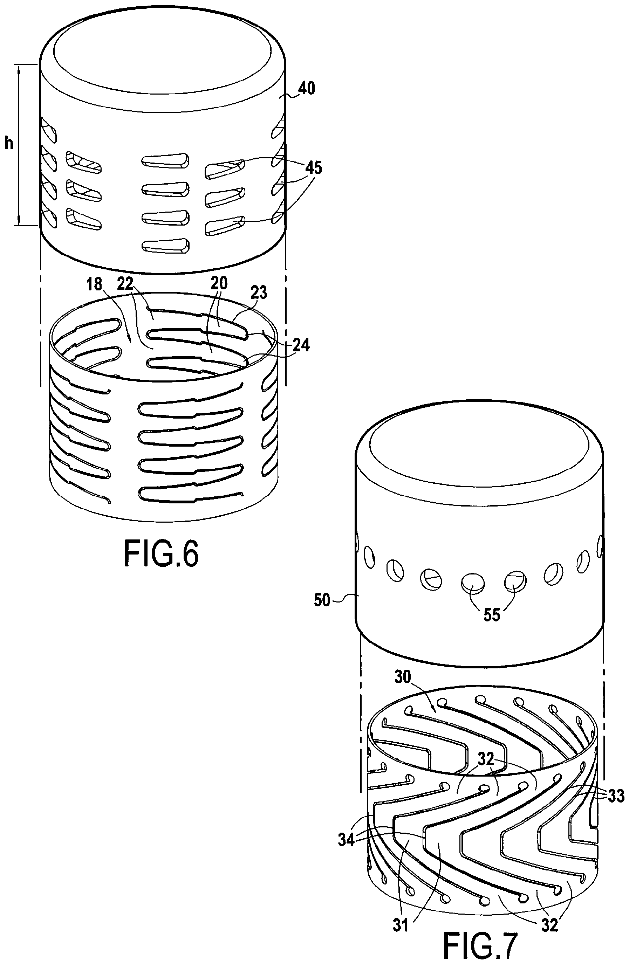

Les figures 6 et 7 illustrent des variantes de languettes 20 et 31 qui permettent de gérer l'admission d'air dans la chambre sur le même principe. Les languettes 20 et 31 sont, dans ces exemples, définies par une portion fendue d'une chemise d'admission d'air 18 et 30 laquelle est positionnée à l'intérieur de la chambre.

On a représenté à la figure 6 un premier exemple de languettes 20 élastiquement déformables formées par des fentes 22 réalisées dans une chemise 18 d'admission d'air. La chemise 18 est insérée à l'intérieur de la chambre 1. La chemise 18 peut être insérée en force dans la chambre. La chemise 18 peut avoir une épaisseur sensiblement constante. Les fentes 22 sont réalisées par opération de découpe de la chemise 18. La découpe peut être effectuée par découpe au laser ou au jet d'eau.

Dans l'exemple illustré, la chemise 18 comprend une pluralité de fentes 22 qui sont réparties autour du volume intérieur de la chambre. On ne sortirait toutefois pas du cadre de l'invention si la chemise 18 comportait une unique fente 22. Chaque fente 22 définit ici une pluralité de languettes 20. Les languettes 20 formées par une même fente 22 sont ici réparties le long de la hauteur h de la chambre.

Les languettes 20 comprennent chacune une première extrémité 22 formée d'un seul tenant avec la chemise 18 et qui est fixe relativement à la paroi interne de la chambre. Les languettes 20 comprennent en outre une deuxième extrémité 24 libre qui est mobile relativement à la paroi interne de la chambre. Les languettes 20 présentent ici une forme allongée le long de la circonférence de la chambre. Les fentes 22 présentent ici chacune une forme sensiblement sinusoïdale (succession de creux et de bosses). La deuxième extrémité 24 de chaque languette 20 étant définie au niveau d'un creux ou d'une bosse. La paroi circonférentielle 40 de l'enceinte comprend une pluralité de ports d'admission 45 chacun étant situé en face d'une languette 20 distincte.

On a représenté à la figure 7 un deuxième exemple de languettes 31 souples formées par des fentes 33 réalisées dans une chemise 30 d'admission d'air. Comme évoqué en lien avec la figure 6, la chemise d'admission d'air 18 est insérée, éventuellement en force, dans la chambre.

Chaque languette 31 est définie entre deux fentes 33 adjacentes. Les fentes 33 et les languettes 31 sont réparties autour du volume intérieur de la chambre. Les deuxièmes extrémités 34 des languettes 31 peuvent ou non être régulièrement réparties autour du volume intérieur V. Les premières extrémités 32 des languettes 31 sont formées d'un seul tenant avec la chemise 30. Les ports d'admission 55 de la paroi circonférentielle 50 de l'enceinte sont aussi positionnés en regard des languettes 31. Les fentes 33 ont dans cet exemple une forme en cloche.

Le système de combustion qui vient d'être décrit peut être adapté à l'alimentation en gaz d'une turbomachine. Les gaz générés par le système de combustion peuvent permettre d'alimenter une turbine, comme une turbine de moteur d'aéronef. La légèreté du système à clapet selon l'invention rend ce système particulièrement avantageux pour un embarquement dans un véhicule comme un aéronef.

## Revendications

1. Système de combustion à volume constant comprenant au moins une chambre de combustion (1) qui comporte au moins un port d'admission (5 ; 45 ; 55) et un port d'échappement (7),
le système étant **caractérisé en ce qu'**il comprend au moins une languette élastiquement déformable (10 ; 20 ; 31) en matériau composite à matrice céramique formant clapet d'admission d'air, la languette étant présente à l'intérieur de la chambre et étant positionnée en regard du port d'admission, la languette comprenant une première extrémité (12 ; 22 ; 32) fixe relativement à une paroi interne (9a) de la chambre et une deuxième extrémité (14 ; 24 ; 34) libre opposée à la première extrémité, la deuxième extrémité étant mobile relativement à la paroi interne.

2. Système selon la revendication 1, dans lequel la première extrémité (12) de la languette (10) est fixée à la paroi interne (9a) de la chambre (1).

3. Système selon la revendication 1, dans lequel la languette (20 ; 31) est définie par au moins une fente (23 ; 33) ménagée dans une chemise d'admission d'air (18 ; 30) positionnée à l'intérieur de la chambre.

4. Système selon l'une quelconque des revendications 1 à 3, dans lequel la chambre (1) comprend une pluralité de ports d'admission (5 ; 45 ; 55), chacun des ports d'admission étant en regard d'une languette (10 ; 20 ; 31) élastiquement déformable.

5. Système selon la revendication 4, dans lequel la chambre est délimitée par une paroi circonférentielle (9 ; 40 ; 50) et dans lequel les ports d'admission (5 ; 45 ; 55) sont ménagés au travers de cette paroi circonférentielle.

## Patentansprüche

1. Verbrennungssystem mit konstantem Volumen, das mindestens eine Brennkammer (1) umfasst, die mindestens einen Einlassport (5; 45; 55) und einen Auslassport (7) aufweist,
wobei das System **dadurch gekennzeichnet ist, dass** es mindestens eine elastisch verformbare Zunge (10; 20; 31) aus Kompositmaterial mit Keramikmatrix umfasst, die ein Lufteinlassventil bildet, wobei die Zunge im Inneren der Kammer vorhanden ist und dem Einlassport zugewandt positioniert ist, wobei die Zunge ein festes erstes Ende (12; 22; 32) relativ zu einer Innenwand (9a) der Kammer und ein freies zweites Ende (14; 24; 34) gegenüber dem ersten Ende umfasst, wobei das zweite Ende relativ zur Innenwand beweglich ist.

2. System nach Anspruch 1, wobei das erste Ende (12) der Zunge (10) an der Innenwand (9a) der Kammer (1) befestigt ist.

3. System nach Anspruch 1, wobei die Zunge (20; 31) durch mindestens einen Schlitz (23; 33) definiert ist, der in einem Lufteinlassmantel (18; 30) ausgebildet ist, der im Inneren der Kammer positioniert ist.

4. System nach einem der Ansprüche 1 bis 3, wobei die Kammer (1) eine Vielzahl von Einlassports (5; 45; 55) umfasst, wobei jeder der Einlassports einer elastisch verformbaren Zunge (10; 20; 31) zugewandt ist.

5. System nach Anspruch 4, wobei die Kammer durch eine Umfangswand (9; 40; 50) begrenzt ist und wobei die Einlassports (5; 45; 55) durch diese Umfangswand ausgebildet sind.

## Claims

1. A constant volume combustion system comprising at least one combustion chamber (1) having at least one admission port (5; 45; 55) and an exhaust port (7);
the system being **characterized in that** it includes at least one elastically deformable tongue (10; 20; 31) made of ceramic matrix composite material forming an air admission valve, the tongue being present inside the chamber and being positioned facing the admission port, the tongue having a first end (12; 22; 32) that is stationary relative to an inside wall (9a) of the chamber and a second end (14; 24; 34), opposite from the first end, the second end being free and movable relative to the inside wall.

2. A system according to claim 1, wherein the first end (12) of the tongue (10) is fastened to the inside wall (9a) of the chamber (1).

3. A system according to claim 1, wherein the tongue (20; 31) is defined by at least one slot (23; 33) formed in an air admission sleeve (18; 30) positioned inside the chamber.

4. A system according to any one of claims 1 to 3, wherein the chamber (1) comprises a plurality of admission ports (5; 45; 55), each of the admission ports facing an elastically deformable tongue (10; 20; 31).

5. A system according to claim 4, wherein the chamber is defined by a circumferential wall (9; 40; 50) and wherein the admission ports (5; 45; 55) are formed through the circumferential wall.
